# EUROPEAN PATENT SPECIFICATION

(11) **EP 3 727 008 B1**
(45) Date of publication and mention of the grant of the patent: **18.08.2021**
(21) Application number: 18810978.9
(22) Date of filing: 26.11.2018
(51) Int. Cl.: A23F 3/16

(54) **A PROCESS FOR PRODUCING A LIQUID TEA PRODUCT**
VERFAHREN ZUR HERSTELLUNG EINES FLÜSSIGEN TEEPRODUKTS
MÉTHODE DE PRODUCTION D'UN PRODUIT DE THÉ LIQUIDE

(30) Priority: 19.12.2017 EP 17208472
(43) Date of publication of application: 28.10.2020
(73) Proprietor: Unilever IP Holdings B.V., 3013 AL Rotterdam (NL); Unilever PLC, London Greater London EC4Y 0DY (GB)
(72) Inventor: GUPTA, Payal, Whitefield, Bangalore 560066 (IN); SINGH, Gurmeet, Whitefield, Bangalore 560048 (IN); SINGH, Saurabh, Kumar, Marathahalli, Bangalore 560037 (IN)
(74) Representative: Warner, Guy Jonathan
(86) International application number: PCT/EP2018/082491
(87) International publication number: WO 2019/120890

(56) References cited:
- EP-A1- 1 466 530
- EP-A1- 2 642 869
- WO-A1-2013/092153
- WO-A1-2013/160131
- US-A1- 2007 286 938
- US-A1- 2009 169 679

## Description

### Field of the invention

The present invention relates to a process for producing a tea product, and more particularly the present invention relates to a process for producing a liquid tea product with enhanced aroma.

### Background of the invention

Tea based beverages have been popular throughout the world for many hundreds of years. It is believed that consumption of tea provides refreshment to consumers. Therefore, for researchers it has always been an interesting field to develop different tea products with different formats to satisfy consumer needs.

As tea is considered as one of the beverages that provides refreshment, hence sensorials are one of the most important factors for tea. The sensorial properties of tea products include colour, appearance, aroma, *etc.* Among these properties, aroma is one of the main parameters for consideration. Aroma provides organoleptic properties to a tea product. Consumers throughout the world prefer a tea product enriched with aroma.

Tea products are available in various formats, e.g. leaf tea products, instant tea products, liquid tea products. At present, the ready to drink tea formats like liquid tea product are gaining popularity as consumers do not have to invest time for brewing the tea.

Various processing methods using tea leaves for making tea juice are known in the art.

WO 2009/059924 (UNILEVER, 2009) disclosed a process comprising the steps of: expressing juice from fresh tea leaves thereby to produce leaf residue and tea juice, wherein the amount of expressed juice is between 10 and 300 ml per kg of the fresh tea leaves; and processing the leaf residue to produce leaf tea and/or a tea extract.

WO 2009/098231(UNILEVER, 2009) disclosed a process for manufacturing a tea product comprising the step of combining tea juice expressed from a first supply of fresh tea leaves with leaf tea from a second supply of fresh tea leaves and/or with tea solids extracted from the leaf tea.

There is also prior art which disclose the recovery of aroma from tea.

WO2007/039018 (Unilever, 2007) describes a process for manufacturing a leaf tea comprising the steps of providing fresh tea leaf, recovering aroma from the fresh tea leaf, and drying the fresh tea leaf to form the leaf tea product. The aroma is recovered whilst at least partially drying the fresh leaf in a low-convention dryer.

WO 2011/069788 (Unilever, 2011) describes a process for the recovery of volatile aroma compounds from a vegetable material comprising the steps of: (a) contacting the vegetable material with a gas in a dryer wherein the amount of moisture in the gas entering the dryer is less than 15 g/kg dry gas; (b) contacting the dryer exhaust gas stream with water vapour or steam to obtain a gaseous mixture; and (c) condensing the gaseous mixture to recover a condensate comprising volatile aroma compounds.

WO2013/160131 (Unilever, 2013) describes a process for the recovery of volatile aroma compounds from tea juice, expressed from leaves.

US2009/169679 (Unilever, 2009) describes a process for enhancing recovery of aroma compounds from tea by treating a supsension of tea material with enzymes.

Tea aroma is mainly of two types: green aroma and floral aroma. A tea product with a floral aroma is preferred by many consumers as it increases the overall organoleptic properties of the resulting tea product. This becomes even more relevant when providing a tea product in liquid form wherein the consumers do not spend time brewing the tea beverage.

It is therefore as object of the present invention to provide a liquid tea product enriched with notes of floral aroma.

It is another object of the present invention to provide a process for producing a liquid tea product enriched with notes of floral aroma.

The present inventors while working to provide a liquid tea product enriched with notes of floral aroma have surprisingly found that a process of treating a liquid tea juice with selected enzymes produces a tea product enriched with notes of floral aroma and thereby satisfying one or more of the above mentioned objects.

### Summary of the invention

According to a first aspect of the present invention, there is provided a process of preparation of a liquid tea product comprising the steps of:
a. incubating fresh tea leaf at a temperature in the range 4°C to 60°C under anaerobic conditions for a period of 4 to 36 hours;
b. subjecting the incubated leaf to a step of comminution and fermentation;
c. expressing juice from the fermented tea leaf to produce leaf residue and tea juice;
d. incubating the tea juice in the presence of 0.001 to 5 wt% of at least one enzyme having β-glucosidase activity of at least 50 units/mg so as to produce the liquid tea product.

According to a second aspect of the present invention there is provided a liquid tea product comprising tea juice, wherein the weight ratio of linalool to t-2-hexenal is greater than 0.55.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se.* Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Fresh tea leaf'' refers to tea leaf, buds and/or stem that have never been dried to a water content of less than 30% by weight, and usually have water content in the range 60 to 90%.

"Fermentation" refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

The present invention provides a process of preparation of a liquid tea product comprising the steps of:
a. incubating fresh tea leaf at a temperature in the range 4°C to 60°C under anaerobic conditions for a period of 4 to 36 hours;
b. subjecting the incubated leaf to a step of comminution and fermentation;
c. expressing juice from the fermented tea leaf to produce leaf residue and tea juice;
d. incubating the juice in the presence of 0.001 to 5 wt% of at least one enzyme having β-glucosidase activity of at least 50 units/mg so as to produce the liquid tea product.

### Step (a):

Step (a) includes incubating fresh tea leaf at a temperature in the range 4°C to 60°C under anaerobic conditions for a period of 4 to 36 hours. The term "anaerobic conditions" as used herein means that the gas phase in contact with the leaf has less than 3%, preferably less than 2% and more preferably less than 1% oxygen by volume. It is particularly preferred that the gas phase in contact with the leaf is substantially free of oxygen.

The fresh leaf may be selected as two leaves and a bud, three leaves and a bud, or more than three leaves and a bud. The duration of time between plucking the fresh tea leaf and the incubation is preferably less than 24 hours, more preferably less than 12 hours and most preferably less than 8 hours. However, it is possible that the duration of time between plucking the fresh tea leaf and the incubation is longer than 24 hours if the tea leaf is stored at temperature of preferably less than 15°C.

### Anaerobic conditions:

The anaerobic conditions are optionally achieved by:
i. placing the fresh tea leaf in a container, and closing the container, or
ii. placing the tea leaf in a container, purging a gas essentially free of oxygen through the container, and closing the container, or placing the leaf in an airtight chamber or under vacuum.

Preferably, the anaerobic conditions are achieved by: placing the fresh tea leaf in a container, and closing the container, or placing the tea leaf in a container, purging a gas essentially free of oxygen through the container through the container, and closing the container.

By placing the fresh leaf in a container and closing the container, the oxygen concentration in the gas phase decreases with time and anaerobic conditions are achieved after keeping the container closed for a certain amount of time. The container is closed for a duration of preferably greater than 3 hours, more preferably greater than 4 hours and most preferably greater than 6 hours or even greater than 8 hours.

Alternatively and more preferably, the anaerobic conditions are achieved by placing the leaf in a container, purging a gas essentially free of oxygen through the container and closing the container. The gas other than oxygen is preferably nitrogen or carbon dioxide, most preferably nitrogen.

Once the container is closed in step (i) or (ii) above, there is no particular restriction as to the pressure in the container. The pressure inside the closed container is preferably from 1 to 1000 mm Hg absolute, more preferably 10 to 800 mm Hg absolute and most preferably 20 mm Hg.

It is preferred that the moisture loss from the leaf during the step is as low as possible. This is advantageously and conveniently achieved by carrying out this step under closed conditions. The incubated tea leaf after this step preferably comprises water in the range of from 70 to 75% by weight.

### Incubation temperature:

Step (a) is at a temperature in the range 4°C to 60°C, preferably in the range 4°C to 55°C, more preferably in the range 10°C to 50°C.

### Duration of anaerobic incubation:

The time of incubation is in the range of 4 to 36 hours, preferably 4 to 30 hours, more preferably 6 to 30 hours and most preferably 8 to 20 hours.

### Step (b):

Step (b) comprises subjecting the incubated leaf to a step of comminution and fermentation. The comminution step is preferably carried out by crushing, tearing and curling (known in the art of tea processing as CTC). One or more CTC steps may be carried out. In the comminution step, the incubated leaf breaks up and releases enzymes that exist in the leaf.

Alternatively, after step (a), the incubated tea leaf is rolled in an orthodox roller or comminuted in a rotorvane, or a combination thereof. During these steps precursors present in the tea leaf become amenable to the enzymes.

In the process of the present invention, there is preferably no step of comminution of the tea leaf before step (a).

The comminuted leaf then undergoes fermentation. Preferably, fermentation is carried out by keeping the comminuted leaf at a temperature of 10°C to 60°C for 15 minutes to 5 hours. Preferably, the temperature of the fermentation is between 25 to 45°C and more preferably 25 to 40°C. The time for fermentation preferably is from 30 minutes to 4 hours and more preferably 1 to 4 hours and most preferably 1 to 3 hours. In this stage, the leaf undergoes enzymatic reactions, which produce the characteristics typical of black tea.

### Step (c):

Step (c) comprises expressing juice from the fermented tea leaf to produce leaf residue and tea juice. The fermented tea leaf is pressed / squeezed to take out the juice. The amount of expressed juice is preferably at least 50 mL per kg of the fresh tea leaves. The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. The juice and the leaf residue may separated by filtration or centrifugal separation.

As used herein the term "expressing juice" refers to squeezing out juice from the fermented tea leaf using physical force, as opposed to extraction of tea solids with the use of a solvent. Thus the term "expressing" encompasses such means as squeezing, pressing, wringing, spinning and extruding. It is possible (although not preferred) that a small amount of solvent (e.g. water) is added to the fermented tea leaf during the expression step. However, in order to prevent significant extraction of tea solids by the solvent, the moisture content of the fermented tea leaf during expression is that of fresh tea leaves as defined hereinabove. In other words, during the expression step, the moisture content of the fermented tea leaf is between 30 and 90% by weight, more preferably between 60 and 90%. It is also preferred that the fresh leaves and/or fermented tea leaf are not contacted with non-aqueous solvent (e.g. alcohols) prior to or during expression, owing to the environmental & economic problems associated with such solvents.

The juice may be obtained from the fermented tea leaf in a single pressing or in multiple pressings. Preferably the juice is obtained from a single pressing as this allows for a simple and rapid process.

In order to minimize generation of off-flavours in the leaf tea and/or juice, it is preferred that the expression step is performed at ambient temperature. For example, the leaf temperature may be from 5°C to 60°C, more preferably 10°C to 40°C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 seconds to 1 hour, more preferably from 10 seconds to 20 minutes and most preferably from 30 seconds to 5 minutes.

Preferably, the leaf residue may be dried at a temperature of 80°C to 130°C, more preferably 90°C to 130°C, even more preferably 100°C to 130°C to obtain a leaf tea product.

### Step (d):

This step comprises incubating the tea juice in the presence of 0.001 to 5 wt% of at least one enzyme having β-glucosidase activity of at least 50 units/mg so as to produce the liquid tea product.

In this step at least one exogeneous enzyme is added to the tea juice. The amount of enzyme added to the juice is in the range from 0.001 to 5 wt%, preferably 0.01 to 4 wt% and most preferably 0.1 to 2 wt%. The preferred time of addition of the enzyme is just after step (c). The enzyme so added has β-glucosidase activity of at least 50 units/mg, preferably of at least 80 unit/mg and more preferably of at least 100 units/mg and most preferably of at least 150 units/mg. Although there is no particular upper limit for the β-glucosidase activity of said enzyme, preferably the β-glucosidase activity of said enzyme is in the range of 50 to 3000 units/mg, more preferably 80 to 3000 units/mg, even more preferably 100 to 3000 units/mg and most preferably 150 to 3000 units/mg.

The at least one enzyme preferably also has β-galactosidase activity of at least 10 units/mg, more preferably of at least 12 units/mg and most preferably of at least 15 units/mg. Although there is no particular upper limit for the β-galactosidase activity of said enzyme, it is preferred that the β-galactosidase activity of said enzyme is in the range of 10 to 300 units/mg, more preferably 12 to 300 units/mg and most preferably 15 to 300 units/mg.

The at least one enzyme preferably also has β-primeverosidase activity of at least 50 units/mg, more preferably of at least 80 units/mg, even more preferably of at least 100 units/mg and most preferably of at least 150 units/mg. Although there is no particular upper limit for the β-primeverosidase activity of said enzyme, it is preferred that the β-primeverosidase activity of said enzyme is in the range of 50 to 1500 units/mg, more preferably 80 to 1500 units/mg, even more preferably 80 to 1500 units/mg and most preferably 150 to 1500 units/mg.

The time of incubation of the juice with the at least one enzyme as described above is preferably in the range of 30 minutes to 24 hours, more preferably 1 hour to 20 hours, furthermore preferably 2 hours to 15 hours and most preferably 3 hours to 10 hours. Preferably, the tea juice is incubated with the at least one enzyme at a temperature in the range of 5°C to 60°C, more preferably 10°C to 50°C, furthermore preferably 15°C to 40°C and most preferably 20°C to 35°C.

### Optional steps:

The process optionally comprises the further steps of:
A. heating the liquid tea product as obtained in step (d) at a temperature of 50°C to 95°C for about 15 to 150 minutes;
B. collecting the vapour produced in step (A); and
C. recovering a condensate rich in tea aroma.

The juice may be treated by heating the juice at a temperature of 50 to 95°C, preferably 60 to 85°C more preferably 65 to 85°C for 15 to 150 minutes. The time of heating the juice is preferably for 30 to 150 minutes and more preferably for 45 to 150 minutes. The heating may preferably be carried out in a closed vessel to which a condenser is attached. More preferably the heating step is carried out in a rotary evaporator. The vacuum applied for when a rotary evaporator is used, is in the range of 100 to 400 mmHg, preferably 150 to 250 mmHg, more preferably 180 to 225 mmHg.

The vapour obtained by heating the tea juice as described above is collected and passed through a condenser. The condenser condenses the vapour and the tea aroma is recovered/collected as a condensate. These steps can preferably be performed by using a rotary evaporator with an attached condenser. The condenser may be a regular one used for condensing vapour. The condenser is preferably a jacketed one with the provision of passing cold water through the jacket. The temperature of the cold water that passes through the jacket of the condenser is preferably in the range of -10 to 10°C, more preferably in the range of -5 to 5°C, and most preferably in the range of 0 to 5°C.

The aroma condensate thus produced may be further concentrated. The concentrated aroma may then be added to the tea juice product or any other tea product, for example a leaf tea product or a ready-to-drink tea beverage. Preferably the juice obtained is pasteurized after the optional aroma recovery step described above. This has two effects. Firstly, pasteurization makes the juice suitable for direct consumption, and secondly it deactivates the at least one enzyme that is added in the process. The pasteurization temperature is preferably in the range of 70°C to 95°C, more preferably 75°C to 90°C and most preferably 75°C to 85°C.

The present invention provides a liquid tea product comprising tea juice wherein the weight ratio of linalool to t-2-hexenal is greater than 0.55, more preferably greater than 0.58 and most preferably greater than 0.6. Preferably the liquid tea product has a weight ratio of linalool to E-2-hexenol of greater than 0.4, preferably greater than 0.42 and more preferably greater than 0.45.

Now the invention will be demonstrated in terms of examples. The following examples are just for illustration and in no way limit the scope of the present invention.

### Examples

### Preparation of different liquid tea products:

### Comparative example A:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool.

### Comparative example B:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.2 wt% (by weight of tea juice) of an enzyme Aromase ® H2 [obtained from Amano; Product No: 9001-22-3; having β-glucosidase activity of 1837 units/mg, β-galactosidase activity of 17 units/mg and β-primeverosidase activity of 1067 units/ mg] was added. Then the juice with the added enzyme was incubated at about 25°C for 4 hours.

### Comparative example C:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.05 wt% (by weight of tea juice) an enzyme Rapidase ® sensation [obtained from DSM; Product No: 914710901; having β-glucosidase activity of 162 units/mg, β-galactosidase activity of 190 units/mg and β-primeverosidase activity of 198 units/ mg] was added. Then the juice with the added enzyme was incubated at about 25°C for 4 hours.

### Comparative example D:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.2 wt% of Aromase ® H2 and 0.05 wt% of Rapidase ® sensation were added together. The wt% was measured by weight of tea juice. Then the juice with the added enzymes was incubated at about 25°C for 4 hours.

### Comparative example E:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool.

### Example 1:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.2 wt% (by weight of tea juice) of an enzyme Aromase ® H2 was added. Then the juice with the added enzyme was incubated at about 25°C for 4 hours.

### Example 2:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.05 wt% (by weight of tea juice) of an enzyme Rapidase ® sensation was added. Then the juice with the added enzyme was incubated at about 25°C for 4 hours.

### Example 3:

Fresh tea leaves (moisture content 77%) were procured from the tea garden in southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (by exposing to air at 25°C) for 90 minutes. After that the dhool was subjected to mechanical compression using a pneumatic dewatering system at a pressure of 6kgf/cm². Pressure was applied, held for 1 to 2 minutes and then released. This process was repeated until the dhool stopped releasing juice. It was noted that the amount of juice expressed by this process was -30% by weight of the dhool. After that 0.2 wt% of Aromase ® H2 and 0.05 wt% of Rapidase ® sensation were added together. The wt% was measured by weight of tea juice. Then the juice with the added enzymes was incubated at about 25°C for 4 hours.

Measurement of aroma in the different liquid tea products as obtained above:
The aroma volatiles were measured using standard gas chromatography (GC) techniques.

Gas chromatography (GC) was used to characterize the aroma profile of the tea juice. 3 mL of juice was taken for analysis in a capped GC vial. Aroma was measured in the headspace using a SPME fibre after the samples were preincubated (10 min) and then kept at 70°C for 20 min. The conditions for gas chromatography and aroma extraction by SPME (solid phase micro extraction) are given below.

### GC-FID conditions:

Volatile compounds from tea samples were analysed using a gas chromatograph with a FID detector (Perkin Elmer auto System XL). A CP-wax 52 CB (30m X 0.25mm, film thickness 0.15µm) column was used for analysis. The injector was operated at a split ratio of 1:5 with helium as the carrier gas at a constant flow rate of 1.0mL/min. The injector was maintained at 230°C. The detector temperature was maintained at 250°C. The oven temperature was set at 45°C throughout the experiment.

### SPME Conditions:

Analysis of volatile compounds released from the tea samples was carried out using SPME. More particularly, a 2cm stable flex fiber, coated with 50/30µm poly(divinylbenzene) (DVB)/ carboxen (CAR) /poly(dimethylsiloxane) (PDMS) (Supelco, Bellefonte, PA) was used with automated SPME system (Combi PAL system).

### Equipment specifications and Experimental Conditions:

SPME Fiber: Grey fiber (PDMS/DVB/CAR)
Pre-Incubation time: 10:00 min
Incubation temp: 70°C
Needle Penetration: 10 mm
Fiber Penetration: 20 mm
Extraction Time: 20:00 min
Desorb to: GC Injector port 1
Injection Time: 5:00 min
Post fiber Condition time: 15 min
GC Run time: 50 min
Cooling time: 10min
Fiber conditioning temp: 230°C

The peak area is calculated for the individual volatile compounds from the GC chromatograms. Standard concentration curves are generated for each volatile. These standard curves are used to convert the peak area to a concentration for the respective volatiles,

The results are summarized below in Table 1.

**Table 1**

| Aroma Molecule (ppm) | Example No. | | | | | | | |
|---|---|---|---|---|---|---|---|---|
| | A | B | C | D | E | 1 | 2 | 3 |
| Signature Green aroma molecules in tea | | | | | | | | |
| t-2 hexanal | 9.29 | 11.89 | 3.08 | 3.64 | 2.96 | 2.45 | 1.71 | 1.82 |
| E-2-hexenol | 10.23 | 8.41 | 10.80 | 8.26 | 5.24 | 2.96 | 4.11 | 2.33 |

| Signature Floral aroma molecules in tea | | | | | | | | |
|---|---|---|---|---|---|---|---|---|
| Linalool | 2.03 | 2.39 | 1.54 | 1.72 | 1.61 | 1.50 | 2.18 | 1.80 |
| Methyl Salicylate | 0.47 | 0.86 | 0.32 | 0.64 | 0.35 | 0.52 | 0.45 | 0.67 |

| Ratios | | | | | | | | |
|---|---|---|---|---|---|---|---|---|
| Total Floral/Total Green | 0.13 | 0.16 | 0.13 | 0.19 | 0.23 | 0.37 | 0.45 | 0.59 |
| Linalool/ t-2 hexanal | 0.22 | 0.20 | 0.49 | 0.47 | 0.54 | 0.61 | 1.27 | 0.99 |
| Linalool/ E-2-hexenol | 0.19 | 0.28 | 0.14 | 0.21 | 0.31 | 0.50 | 0.53 | 0.77 |

Form the above table 1 it is evident that the liquid tea products that are within the scope of the present invention have much higher levels of the floral notes in the liquid tea product. The ratio of total floral (Linalool + Methyl Salicylate) to total green (t-2 hexanal + E-2-hexenol) is much higher in case of examples (1 to 3) that are within the scope of the present invention when compared with comparative examples (A to E) that are outside the scope of the present invention. As can be seen from the above table 1 the ratio of linalool to t-2 hexanal is greater than 0.5 for all the examples 1 to 3. In the same way, it can also be seen that the ratio of linalool to E-2 hexenol is greater than 0.4 for all the examples 1 to 3.

The resultant tea products were tasted by a group of panellists. It was found that the liquid products of the present invention had differentiated aroma profiles (less green, more floral notes) which was liked by the panellists.

From the above it is evident that the present invention provides a liquid tea product enriched with floral aroma notes.

## Claims

1. A process of preparation of a liquid tea product comprising the steps of:
a. incubating fresh tea leaf at a temperature in the range 4°C to 60°C under anaerobic conditions for a period of 4 to 36 hours;
b. subjecting the incubated leaf to a step of comminution and fermentation;
c. expressing juice from the fermented tea leaf to produce leaf residue and tea juice;
d. incubating the juice in the presence of 0.001 to 5 wt% of at least one enzyme having β-glucosidase activity of at least 50 units/mg so as to produce the liquid tea product.

2. A process as claimed in claim 1 wherein the at least one enzyme added in step (d) also has β-galactosidase activity of at least 10 units/mg.

3. A process as claimed in claim 1 wherein the at least one enzyme added in step (d) also has β-primeverosidase activity of at least 50 units/mg.

4. A process as claimed in claim 1 wherein the incubation time in step (d) is in the range of 30 minutes to 24 hours.

5. A process as claimed in claim 1 further comprising the steps of:
A. heating the liquid tea product as obtained in step (d) at a temperature of 50°C to 95°C for about 15 to 150 minutes;
B. collecting the vapour produced in step (A); and
C. recovering a condensate rich in tea aroma.

6. A process as claimed in claim 1 wherein the leaf residue as produced in step (c) is dried at a temperature of 80°C to 130°C to obtain a leaf tea product.

7. A process as claimed in claim 1 wherein fermentation is performed by keeping the comminuted leaf at a temperature of 10°C to 60°C for 15 minutes to 5 hours.

8. A process as claimed in claim 1 wherein the anaerobic conditions are achieved by:
i. placing the fresh tea leaf in a container, and closing the container, or
ii. placing the tea leaf in a container, purging a gas essentially free of oxygen through the container, and closing the container, or placing the leaf in an airtight chamber or under vacuum.

9. A process as claimed in claim 8 wherein the anaerobic conditions are achieved by placing the fresh tea leaf in a container, and closing the container.

10. A liquid tea product comprising tea juice as obtained/obtainable by the process as claimed in any one of the preceding claims, wherein the weight ratio of linalool to t-2-hexenal is greater than 0.55 and
further **characterized in that** the weight ratio of linalool to E-2-hexenol is greater than 0.4.

## Patentansprüche

1. Verfahren zur Herstellung eines flüssigen Teeprodukts, umfassend die Schritte:
a. Inkubieren von frischem Teeblatt bei einer Temperatur im Bereich von 4 °C bis 60 °C unter anaeroben Bedingungen für einen Zeitraum von 4 bis 36 Stunden;
b. Unterwerfen des inkubierten Blattes einem Schritt der Zerkleinerung und Fermentation;
c. Auspressen von Saft aus dem fermentierten Teeblatt, um Blattrückstand und Teesaft herzustellen;
d. Inkubieren des Saftes in Anwesenheit von 0,001 bis 5 Gew.-% mindestens eines Enzyms mit β-Glucosidase-Aktivität von mindestens 50 Einheiten/mg, um das flüssige Teeprodukt herzustellen.

2. Verfahren wie in Anspruch 1 beansprucht, wobei das mindestens eine in Schritt (d) zugegebene Enzym auch β-Galactosidase-Aktivität von mindestens 10 Einheiten/mg aufweist.

3. Verfahren wie in Anspruch 1 beansprucht, wobei das mindestens eine in Schritt (d) zugegebene Enzym auch β-Primeverosidase-Aktivität von mindestens 50 Einheiten/mg aufweist.

4. Verfahren wie in Anspruch 1 beansprucht, wobei die Inkubationszeit in Schritt (d) im Bereich von 30 Minuten bis 24 Stunden liegt.

5. Verfahren wie in Anspruch 1 beansprucht, ferner umfassend die Schritte:
A. Erhitzen des in Schritt (d) erhaltenen flüssigen Teeprodukts bei einer Temperatur von 50 °C bis 95 °C für etwa 15 bis 150 Minuten;
B. Sammeln des in Schritt (A) erzeugten Dampfes; und
C. Gewinnen eines Kondensats, das reich an Teearoma ist.

6. Verfahren wie in Anspruch 1 beansprucht, wobei der in Schritt (c) hergestellte Blattrückstand bei einer Temperatur von 80 °C bis 130 °C getrocknet wird, um ein Blattteeprodukt zu erhalten.

7. Verfahren wie in Anspruch 1 beansprucht, wobei die Fermentation durchgeführt wird, indem das zerkleinerte Blatt 15 Minuten bis 5 Stunden bei einer Temperatur von 10 °C bis 60 °C gehalten wird.

8. Verfahren wie in Anspruch 1 beansprucht, wobei die anaeroben Bedingungen erreicht werden durch:
i. Platzieren des frischen Teeblatts in einem Behälter und Verschließen des Behälters oder
ii. Platzieren des Teeblatts in einem Behälter, Spülen eines Gases, das im Wesentlichen frei von Sauerstoff ist, durch den Behälter und Verschließen des Behälters oder Platzieren des Blattes in einer luftdichten Kammer oder unter Vakuum.

9. Verfahren wie in Anspruch 8 beansprucht, wobei die anaeroben Bedingungen erreicht werden, indem das frische Teeblatt in einen Behälter gegeben und der Behälter verschlossen wird.

10. Flüssiges Teeprodukt, umfassend Teesaft, wie durch das Verfahren wie in einem der vorhergehenden Ansprüche beansprucht erhalten/erhältlich, wobei das Gewichtsverhältnis von Linalool zu t-2-Hexenal größer als 0,55 ist und
ferner **dadurch gekennzeichnet, dass** das Gewichtsverhältnis von Linalool zu E-2-Hexenol größer als 0,4 ist.

## Revendications

1. Procédé de préparation d'un produit de thé liquide comprenant les étapes de :
a. incubation de feuille de thé fraîche à une température dans l'intervalle de 4°C à 60°C dans des conditions anaérobies sur une période de 4 à 36 heures ;
b. soumission de la feuille incubée à une étape de broyage et fermentation ;
c. expression de jus à partir de la feuille de thé fermentée pour produire un résidu de feuille et du jus de thé ;
d. incubation du jus en présence de 0,001 à 5 % en masse d'au moins une enzyme ayant une activité de β-glucosidase d'au moins 50 unités/mg afin de produire le produit de thé liquide.

2. Procédé selon la revendication 1, dans lequel la au moins une enzyme ajoutée dans l'étape (d) présente également une activité de β-galactosidase d'au moins 10 unités/mg.

3. Procédé selon la revendication 1, dans lequel la au moins une enzyme ajoutée dans l'étape (d) présente également une activité de β-primeverosidase d'au moins 50 unités/mg.

4. Procédé selon la revendication 1, dans lequel la durée d'incubation dans l'étape (d) se trouve dans l'intervalle de 30 minutes à 24 heures.

5. Procédé selon la revendication 1 comprenant de plus les étapes de :
A. chauffage du produit de thé liquide comme obtenu dans l'étape (d) à une température de 50°C à 95°C pendant d'environ 15 à 150 minutes ;
B. recueil de la vapeur produite dans l'étape (A) ; et
C. récupération d'un condensat riche en arôme de thé.

6. Procédé selon la revendication 1, dans lequel le résidu de thé comme produit dans l'étape (c) est séché à une température de 80°C à 130°C pour obtenir un produit de thé en feuille.

7. Procédé selon la revendication 1, dans lequel la fermentation est réalisée en maintenant la feuille broyée à une température de 10°C à 60°C pendant de 15 minutes à 5 heures.

8. Procédé selon la revendication 1, dans lequel les conditions anaérobies sont réalisées par :
i. disposition de la feuille de thé fraîche dans un récipient, et fermeture du récipient, ou
ii. disposition de la feuille de thé dans un récipient, purge d'un gaz essentiellement exempt d'oxygène à travers le récipient, et fermeture du récipient, ou disposition de la feuille dans une chambre étanche à l'air ou sous vide.

9. Procédé selon la revendication 8, dans lequel les conditions anaérobies sont réalisées par disposition de la feuille de thé fraîche dans un récipient, et fermeture du récipient.

10. Produit de thé liquide comprenant du jus de thé comme obtenu/pouvant être obtenu par le procédé selon l'une quelconque des revendications précédentes, dans lequel le rapport en masse de linalool à t-2-hexénal est supérieur à 0,55 et
**caractérisé de plus en ce que** le rapport en masse de linalool à E-2-hexénol est supérieur à 0,4.
